# EUROPEAN PATENT SPECIFICATION

(11) **EP 1 964 781 B1**
(45) Date of publication and mention of the grant of the patent: **02.06.2010**
(21) Application number: 08151375.6
(22) Date of filing: 13.02.2008
(51) Int. Cl.: B65B 51/10, A24C 5/24, B29C 65/18

(54) **A machine for manufacturing and/or packing tobacco products**
Maschine zur Herstellung und/oder Verpackung von Tabakerzeugnissen
Machine pour la fabrication et/ou l'emballage de produits du tabac

(30) Priority: 27.02.2007 IT BO20070126
(43) Date of publication of application: 03.09.2008
(73) Proprietor: G.D. S.p.A, 40133 Bologna (IT)
(72) Inventor: Spatafora, Mario, 40057 Granarolo Emilia (Bologna) (IT)
(74) Representative: Ghioni, Carlo Raoul Maria

(56) References cited:
- EP-A- 0 812 665
- EP-A- 1 055 603
- US-A- 2 806 116
- US-A- 3 480 505

## Description

The present invention relates to a machine for manufacturing and/or packing tobacco products (see e.g. EP 1 055 603 A1).

In particular, the invention finds application to advantage in machines equipped with devices of which the function is to weld or seal a wrapping material enveloping respective tobacco products.

Conventionally, machines for manufacturing and/or packing tobacco products incorporate feed means by which the selfsame products are directed toward a welding/sealing station.

In the case of cigarette makers, for instance, the aforementioned feed means advance a continuous cigarette rod toward a sealing device that serves to join together the overlapping longitudinal edges of a tubular wrap ensheathing a stream of tobacco filler.

Thus, as the continuous cigarette rod advances, a heater head of the sealing device warms and activates an adhesive applied previously between the overlapping edges of the tubular wrap.

The art field in question also includes machines by which packets of cigarettes enveloped initially in a heat-shrinkable wrapping material are advanced through the sealing station by a conveyor belt or a rotating drum.

The single packets are conveyed normally in an ordered succession and stopped momentarily so that the heater head can engage an end face of the packet for a length of time sufficient to bond the free edges of the overwrap material.

In particular, the welding/sealing head consists in a metal body furnished with a contact surface designed to engage a given portion of the wrap that needs to be welded or sealed.

The welding/sealing head is activated by an electrical circuit that induces a current in the metal body and thus causes it to be heated by the Joule effect.

The electrical circuit is piloted preferably by an electronic control system such as will regulate the current according to the temperature value that should register in the metal body.

The aforementioned temperature value is selected on the basis of the type of material to be heated (packet overwrap, or cigarette rod paper), and the length of time the tobacco product remains in close proximity to the heated contact surface.

Thus, having selected the speed at which products are fed through the welding or sealing station, the temperature at the contact surface of the metal body is regulated accordingly.

Machines of the type in question are affected by an important drawback, however, attributable to the high thermal inertia of the heated metal body, that is to say the capacity of the body to cool down and heat up within a given period of time.

As a result, the times involved in regulating the temperature of the metal body are somewhat lengthy.

Consequently, if the speed at which the products advance should increase, the products will not be welded/sealed correctly until the contact surface is brought up to the appropriate temperature. Conversely, if the products begin to advance more slowly, they will be heated to excess and damaged.

A heating fail having a pierced structure to obtain a lower heat capacity is known from US 3 480 505 A.

The object of the present invention is to provide a machine for manufacturing and/or packing tobacco products, such as will be unaffected by drawbacks of the type associated with prior art machines.

In particular, the object of the invention is to provide a machine for manufacturing and/or packing tobacco products, equipped with welding or sealing heads in which thermal inertia is minimized.

The stated objects are realized in a machine for manufacturing and/or packing tobacco products, of which the technical characteristics are as recited in any one or more of the appended claims.

The invention will now be described in detail, by way of example, with the aid of the accompanying drawings, in which:
- figure 1 illustrates a machine for manufacturing and/or packing tobacco products according to the present invention, viewed schematically and in perspective;
- figure 2 shows a constructional part of a machine for manufacturing and/or packing tobacco products, viewed schematically in a side elevation and illustrating an alternative application;
- figure 3 shows a portion of a welding/sealing head forming part of the machine illustrated in figures 1 and 2, viewed in perspective;
- figure 4 shows a welding/sealing head, viewed in a side elevation and in section;

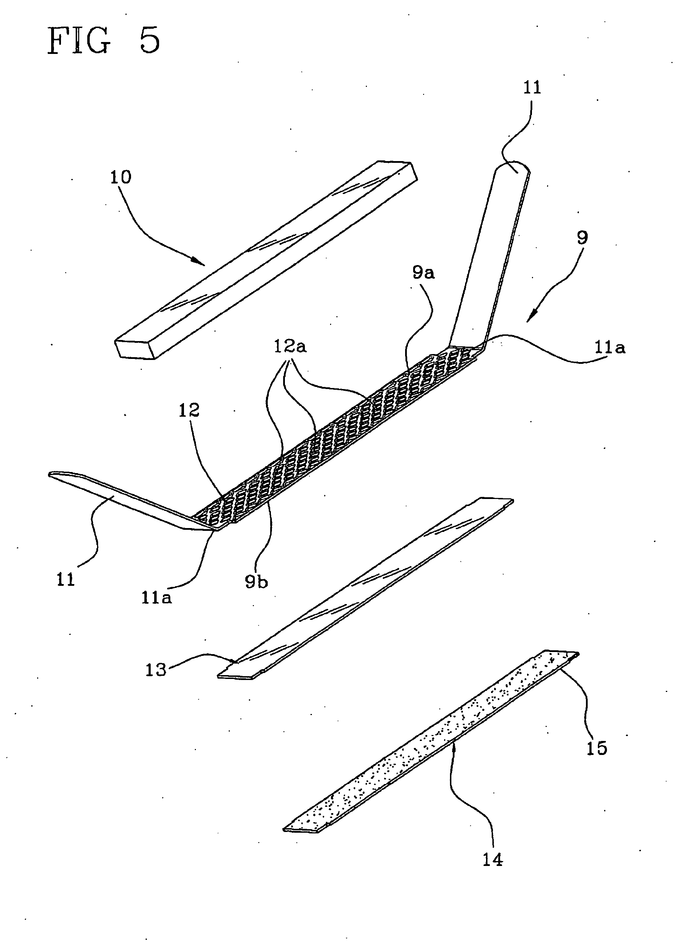

- figure 5 is an exploded and perspective view of the welding/sealing head as in figure 4.

With reference to the accompanying drawings, numeral 1 denotes a machine according to the invention, in its entirety, for manufacturing tobacco products and/or packing such products in a wrapping material.

In practice, the present invention is applicable advantageously to tobacco products 2 of varying description, enveloped in a respective wrapping material 2a that presents a given portion 2b needing to be welded or sealed. By way of example, the products 2 in question might be packets 3 of cigarettes, or continuous cigarette rods 4.

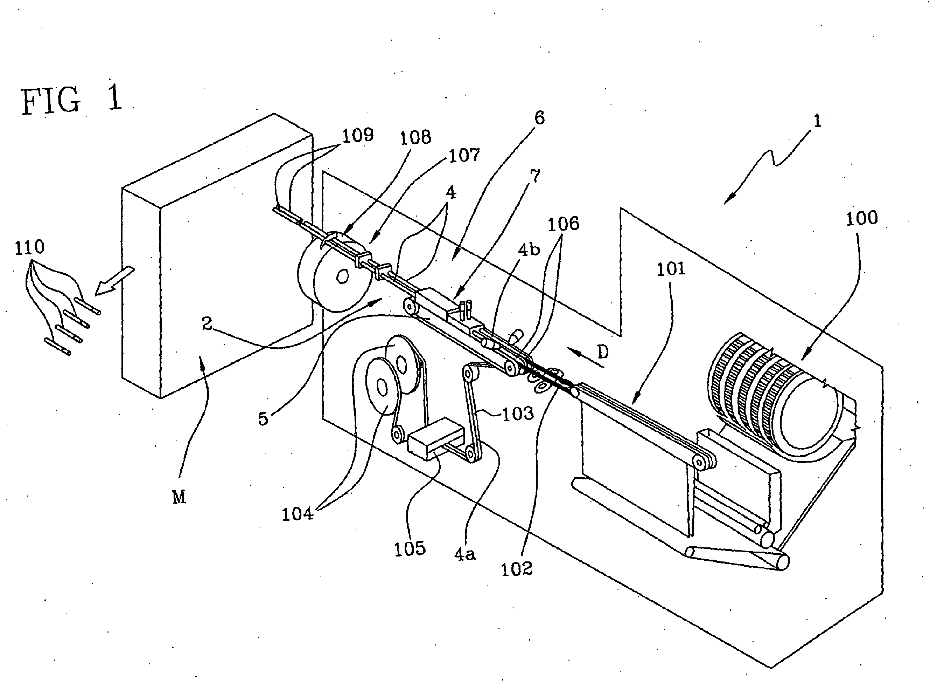

To this end, figure 1 shows a cigarette maker, or rather a machine 1 that manufactures cigarettes by forming a continuously advancing cigarette rod 4. The rod 4 presents a tubular wrap 4a of which respective longitudinal edges 4b are overlapped in readiness to be sealed, as will be described in due course.

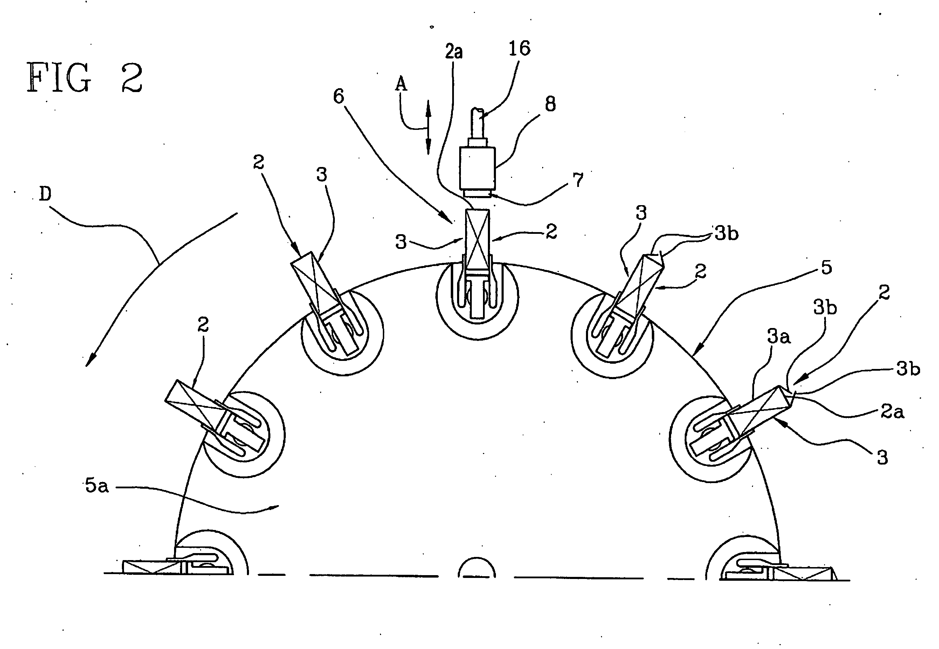

Figure 2 illustrates a constructional part of another machine 1, namely a cigarette packer, in which the tobacco products 2 are packets 3 of cigarettes enveloped in a heat-shrinkable overwrap material 3a.

The overwrap material 3a presents free edges 3b positioned at an end face of the packet 3, which must be sealed by the application of heat.

With reference in particular to figure 1, the machine 1 presents an upstream end equipped with a tobacco feed and transport unit 100, of which the function is to gather a mass of shredded tobacco into a continuous flow of tobacco particles. The component parts of the feed unit 100, not described here in detail, being of conventional embodiment, are arranged in such a way as to direct the tobacco along a predetermined feed path toward a unit 101 by which it is formed into a continuous stream 102.

Two such streams 102 are illustrated, each caused to advance together with a web 103 of paper drawn from a roll 104, following a path that passes through a print device 105 and toward a garniture tongue 106 on which the web 103 of paper is wrapped around the stream 102 of tobacco. The web 103 functions as the aforementioned tubular wrap 4a used to fashion the continuous cigarette rod 4. Whilst the present invention is described and illustrated with reference to a twin track type of cigarette-making line with two garniture tongues, it is applicable likewise advantageously to lines having a single garniture tongue.

The continuous rod 4 is advanced by feed means 5 along a respective feed direction D and through a welding/sealing station 6, where the longitudinal edges 4b are joined permanently one to another.

Located beyond the welding/sealing station 6 is a cutting station 107 where the continuous rod 4 is divided up by a rotary cutter device 108 into discrete cigarette sticks 109 of predetermined and constant length, and more exactly, twice the length of the stick that will ultimately form part of a single cigarette 110.

The cigarette sticks 109 are transferred to a filter attachment machine M of conventional type, not illustrated in detail.

In the case of figure 2, the feed means 5 consist in a rotating drum 5a furnished with pockets, each containing a respective packet 3 of cigarettes. The packets 3 are advanced by the drum 5a along the feed direction D and through the welding/sealing station 6.

In both the solutions of figures 1 and 2, the welding/sealing station 6 is equipped with at least one welding/sealing head 7 serving to heat the predetermined portion 2a of the product 2 mentioned previously. Preferably, the head 7 is carried below a respective holder element 8 not described in detail, being conventional in embodiment.

To advantage, the holder element 8 can be coupled to motion-inducing actuator means 16 (figure 2) of conventional embodiment, likewise not described in detail, rendering the head 7 capable of movement in a direction A transverse to the aforementioned feed direction D followed by the products 2.

Thus, as each packet 3 in turn is brought to a halt at the welding/sealing station 6, the head 7 will move between an operating position of close proximity to the packet 3, in which the edges 3b of the overwrap material 3a are bonded, and an idle position distanced from the packet 3.

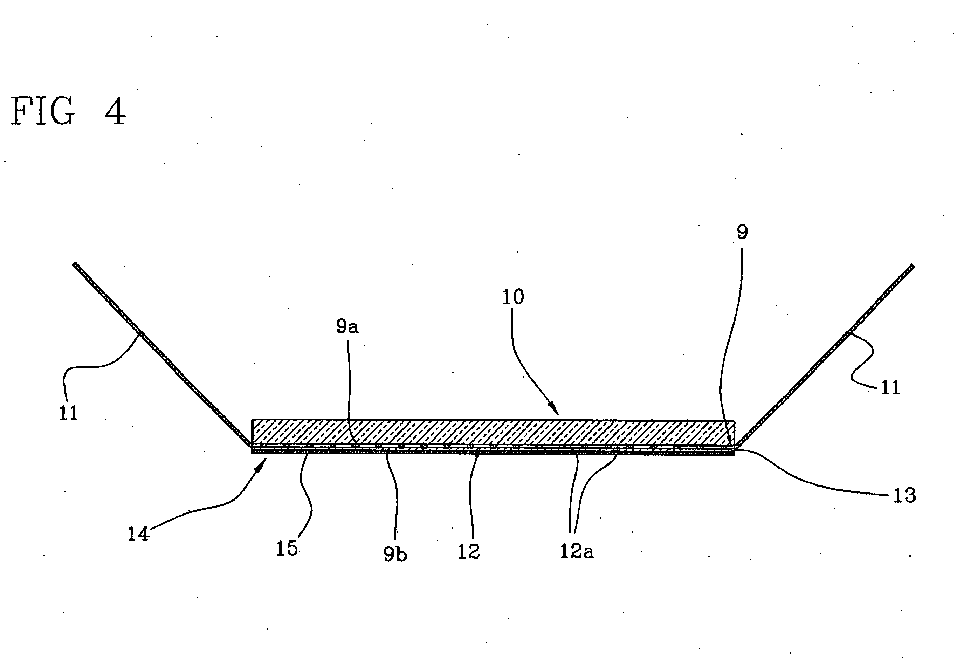

As illustrated to advantage in figure 4, the welding/sealing head 7 consists in a heating foil 9 associated with a respective backing element 10.

More particularly, the foil 9 is electrically conductive and appears substantially as a plate, presenting a first surface 9a breasted with the backing element 10, and a second surface 9b opposite to the first, directed toward the relative tobacco product 2.

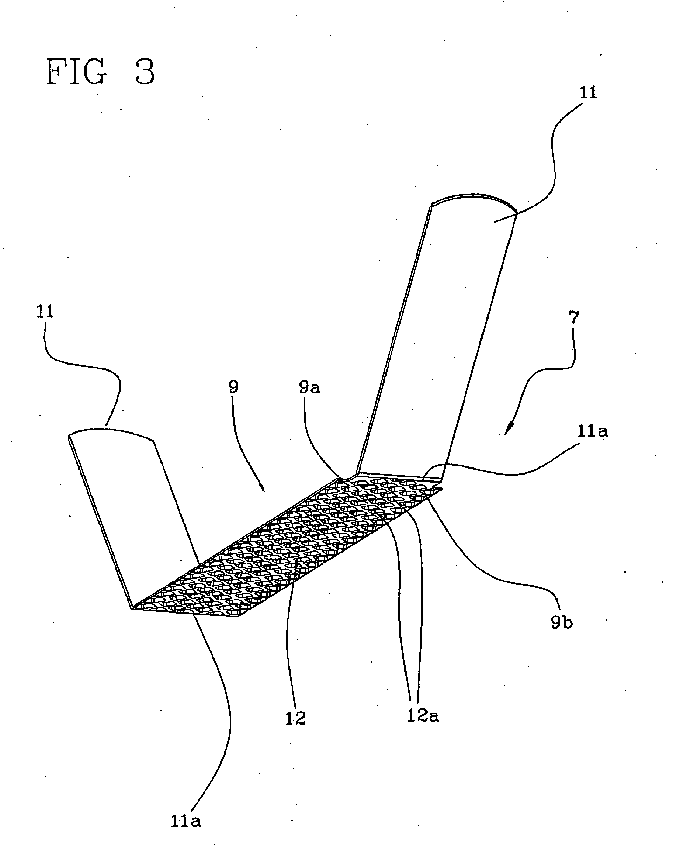

Preferably, the foil 9 presents a substantially rectangular peripheral outline (figure 3) and is furnished with connectors 11 extending from respective shorter sides 11a of the foil 9. To advantage, the connectors 11 are associated with an electrical circuit, not illustrated in the accompanying drawings, such as will direct an electric current through the foil 9 and cause it to heat by the Joule effect.

Moreover, the electrical circuit is coupled to an electronic control system of conventional type governing the electric current, likewise not illustrated in detail, such as will determine the temperature value registering in the foil 9.

In this way, the temperature of the foil 9 can be regulated on the basis of the rate at which the products 2 advance, hence the time for which each product 2 remains exposed to the head 7.

The gauge of the foil 9, preferably a metal, will be less than 0.4 millimetres, and ideally 0.1 mm.

As illustrated to best advantage in figure 3, the foil 9 is pierced at least in part, and preferably of mesh type embodiment, so as to minimize thermal inertia in the electrically conductive material.

More precisely, the foil 9 presents a central portion 12 appearing as a grid, created by a plurality of through holes 12a.

To reiterate, the first surface 9a is offered to the backing element 10, which appears substantially parallelepiped and rectangular in section.

Advantageously, the backing element 10 is made of an electrical and heat insulating material. In a preferred embodiment, the backing element 10 will be ceramic or silicone, and of thickness between 4 and 5 millimetres.

The backing element 10 is therefore appreciably thicker than the foil 9 (figure 4), in order to guarantee the strength and rigidity of the head 7 and ensure that the holder element 8 is suitably heat-insulated, thereby preventing the transmission of heat to other parts of the machine 1.

The foil 9 is anchored to the backing element 10 by means of a first overlay 13 covering the entire second surface 9b presented by the foil 9.

This first overlay 13 consists in a film of ceramic material less than 0.4 millimetres thick, and ideally, 0.1 mm thick

To retain the foil 9 on the backing element 10, the material of the first overlay 13 passes through the holes 12a presented by the pierced structure of the central portion 12, from one face of the foil to the other.

In this situation, the foil 9 effectively remains sandwiched between the backing element 10 and the first overlay 13, both of which are ceramic. As a result, the foil 9 remains electrically insulated and thereby prevented from entering into contact with certain electrically conductive components of the tobacco products 2, like the metal foil paper wrapping contained in cigarette packets 3, which could provide a route for current leakages or short circuits.

Also, the foil 9 is protected from any oxidation that could be caused by the nature of the material from which it is made, and the continual variation in temperature to which it is subject.

Observing figure 4, moreover, it will be seen that the first overlay 13 is particularly thin, presenting a thickness identical, or substantially identical, to that of the foil 9. Consequently, even though the first overlay 13 may be made of a heat-insulating material, it does not impede the transmission of heat toward a product 2 positioned in close proximity. Finally, the welding/sealing head 7 comprises a second overlay 14 covering the entire first overlay 13.

The second overlay 14 consists preferably in a film of silicone having a thickness nominally between 0.01 and 0.1 millimetres, preferably between 0.02 and 0.07 mm, and ideally 0.05 mm.

The second overlay 14 affords a smooth outer surface 15 offered in contact to the predetermined portion 2a of the tobacco product 2.

Advantageously, the second overlay 14 will also be particularly thin, and more precisely, thinner than the first overlay 13. Accordingly, the second overlay 14, like the first, will not impede the transmission of heat to a product 2 breasted with the outer surface 15.

The silicone material utilized for the second overlay 14 affords a particularly smooth and non-abrasive contact surface 15, unlike the ceramic material, which is notoriously porous.

To further advantage, considering the application illustrated in figure 1, where the cigarette rod 4 is heated while in motion, no damage is caused to the tubular wrap 4a as it slides against the outer surface 15. In addition, the fact that the contact surface 15 has a non-porous structure makes it easy to clean.

Significantly, as mentioned above, the heating foil 9 has a low thermal inertia, by virtue of its minimal thickness and its pierced structure.

The temperature of the foil 9 can therefore be regulated swiftly, depending on the speed at which the products 2 advance, so as to ensure that the respective predetermined portions 2a of the products 2 are heated to optimum effect.

In other words, the foil 9 can be brought swiftly to the appropriate temperature for the particular welding or sealing operation.

## Claims

1. A machine for manufacturing and/or packing tobacco products, **characterized in that** it comprises a welding/sealing head (7) designed to secure a wrapping material (2a), presenting a backing element (10), an electrically conductive heating foil (9) presenting a pierced structure, at least in part and covering the backing element (10), and a first electrically insulating overlay (13) covering the foil (9); the first overlay (13) passing from one face of the foil to the other by way of trough holes (12a) establishing the pierced structure to anchor the heating foil (9) to the backing element (10).

2. A machine as in claim 1, wherein the first overlay (13) is a film of ceramic material.

3. A machine as in claim 1 or 2, wherein the first overlay (13) is less than 0.4 millimetres thick, and preferably in the order of 0.1 millimetre thick.

4. A machine as in claim 3, wherein the first overlay (13) covers the surface of the heating foil (9) in its entirety.

5. A machine as in claims 1 to 4, wherein the heating foil (9) presents a mesh structure, at least in part.

6. A machine as in claims 1 to 5, comprising a second electrically insulating overlay (14) covering the first overlay (13).

7. A machine as in claim 6, wherein the second overlay (14) presents a smooth outer surface(15), designed to engage in contact with the wrapping material (2a) welded/sealed by the head (7).

8. A machine as in claim 7, wherein the second overlay (14) is a film of silicone.

9. A machine as in claim 7 or 8, wherein the second overlay (14) is of thickness between 0.01 and 0.1 millimetres, and preferably between 0.02 and 0.07 millimetres.

10. A machine as in claims 1 to 9, wherein the gauge of the heating foil (9) is less than 0.4 millimetres and preferably in the order of 0.1 millimetre.

11. A machine as in claims 1 to 10, wherein the backing element (10) is fashioned from ceramic material or silicone, at least in part.

12. A cigarette maker, comprising at least one welding/sealing head (7) as in claims 1 to 11, by which two overlapping longitudinal edges (46) of a tubular wrap (4a) enveloping a stream of tobacco are secured one to another.

13. A cigarette maker or packer, comprising at least one welding/sealing head (7) as in claims 1 to 11 , by which a hot-melt glue applied previously to the overlapping edges (3b) of a wrapper (3a) is reactivated to secure the selfsame edges (3b) one to another.

14. An automatic cellophaner for overwrapping cigarette packets or cartons of cigarette packets, comprising at least one welding/sealing head (7) as in claims 1 to 11, by which the overlapping edges of a heat- sealable overwrap are secured one to another.

15. An automatic cellophaner for overwrapping cigarette packets or cartons of cigarette packets, comprising at least one welding/sealing head (7) as in claims 1 to 11, by means of which to secure and/or tighten a heat-shrinkable overwrap.

## Patentansprüche

1. Maschine zur Herstellung und/oder Verpackung von Tabakprodukten, **dadurch gekennzeichnet, dass** sie einen Schweiß-/Siegelkopf (7) zur Befestigung eines Verpackungsmaterials (2a) beinhaltet, der Folgendes aufweist: ein Stützelement (10), eine elektrisch leitende Heizfolie (9), die zumindest teilweise eine gelochte Struktur aufweist und die das Stützelement (10) bedeckt, sowie eine erste elektrisch isolierende Beschichtung (13), welche die Folie (9) bedeckt; wobei die erste Beschichtung (13) über Durchgangslöcher (12a), welche die gelochte Struktur bilden, die Folie von einer Folienseite zur anderen durchdringt, um die Heizfolie (9) auf dem Stützelement (10) zu befestigen.

2. Maschine nach Anspruch 1, worin die erste Beschichtung (13) eine dünne Schicht aus keramischem Material ist.

3. Maschine nach Anspruch 1 oder 2, worin die erste Beschichtung (13) weniger als 0,4 Millimeter dick ist, und vorzugsweise im Wesentlichen 0,1 Millimeter dick.

4. Maschine nach Anspruch 3, worin die erste Beschichtung (13) die gesamte Oberfläche der Heizfolie (9) bedeckt.

5. Maschine nach den Ansprüchen 1 bis 4, worin die Heizfolie (9) zumindest teilweise eine Netzstruktur aufweist.

6. Maschine nach den Ansprüchen 1 bis 5, beinhaltend eine zweite elektrisch isolierende Beschichtung (14), welche die erste Beschichtung (13) bedeckt.

7. Maschine nach Anspruch 6, worin die zweite Beschichtung (14) eine glatte Außenoberfläche (15) aufweist, die dazu bestimmt ist, in Berührung mit dem Verpackungsmaterial (2a) zu gelangen, das von dem Kopf (7) geschweißt/gesiegelt wird.

8. Maschine nach Anspruch 7, worin die zweite Beschichtung (14) eine dünne Schicht aus Silikon ist.

9. Maschine nach Anspruch 7 oder 8, worin die zweite Beschichtung (14) zwischen 0,01 und 0,1 Millimeter dick ist, und vorzugsweise zwischen 0,02 und 0,07 Millimeter.

10. Maschine nach den Ansprüchen 1 bis 9, worin die Stärke der Heizfolie (9) weniger als 0,4 Millimeter beträgt, und vorzugsweise im Wesentlichen 0,1 Millimeter.

11. Maschine nach den Ansprüchen 1 bis 10, worin das Stützelement (10) zumindest teilweise aus keramischem Material oder aus Silikon besteht.

12. Zigarettenherstellungsmaschine, zumindest einen Schweiß-/Siegelkopf (7) nach den Ansprüchen 1 bis 11 beinhaltend, durch den zwei einander überlappende Längskanten (4b) einer röhrenförmigen Umhüllung (4a), die einen Tabakstrang einhüllen, aneinander befestigt werden.

13. Zigarettenherstellungs- oder -verpackungsmaschine, zumindest einen Schweiß-/Siegelkopf (7) nach den Ansprüchen 1 bis 11 beinhaltend, durch den ein zuvor auf die einander überlappenden Kanten (3b) einer Umhüllung (3a) aufgetragener Heißschmelzklebstoff reaktiviert wird, um die Kanten (3b) aneinander zu befestigen.

14. Automatischer Cellophanierer zum Umhüllen von Zigarettenpäckchen oder Zigarettenpäckchenkartons, zumindest einen Schweiß-/Siegelkopf (7) nach den Ansprüchen 1 bis 11 beinhaltend, durch den die einander überlappenden Kanten einer heißsiegelbaren Umhüllung aneinander befestigt werden.

15. Automatischer Cellophanierer zum Umhüllen von Zigarettenpäckchen oder Zigarettenpäckchenkartons, zumindest einen Schweiß-/Siegelkopf (7) nach den Ansprüchen 1 bis 11 beinhaltend, durch den eine wärmeschrumpfbare Umhüllung befestigt und/oder geglättet wird.

## Revendications

1. Une machine pour la fabrication et/ou l'emballage de produits du tabac, **caractérisée en ce qu'**elle comprend une tête de soudage/scellage (7) destinée à fixer un matériau d'emballage (2a), présentant un élément de support (10), une feuille chauffante (9) électriquement conductrice présentant une structure percée au moins en partie et recouvrant ledit élément de support (10), et une première couche (13) électriquement isolante recouvrant ladite feuille (9) ; ladite première couche (13) passant d'une face de la feuille à l'autre par l'intermédiaire de trous débouchants (12a) définissant la structure percée pour fixer la feuille chauffante (9) à l'élément de support (10).

2. La machine selon la revendication 1, **caractérisée en ce que** la première couche (13) est un film de matériau céramique.

3. La machine selon la revendication 1 ou 2, **caractérisée en ce que** la première couche (13) a une épaisseur inférieure à 0,4 millimètre, et de préférence une épaisseur de l'ordre de 0,1 millimètre.

4. La machine selon la revendication 3, **caractérisée en ce que** la première couche (13) recouvre la surface de la feuille chauffante (9) dans sa totalité.

5. La machine selon les revendications de 1 à 4, **caractérisée en ce que** la feuille chauffante (9) présente, au moins en partie, une structure réticulée.

6. La machine selon les revendications de 1 à 5, **caractérisée en ce qu'**elle comprend une deuxième couche (14) électriquement isolante recouvrant la première couche (13).

7. La machine selon la revendication 6, **caractérisée en ce que** la deuxième couche (14) présente une surface extérieure (15) lisse, destinée à venir en contact avec le matériau d'emballage (2a) soudé/scellé par la tête (7).

8. La machine selon la revendication 7, **caractérisée en ce que** la deuxième couche (14) est un film de silicone.

9. La machine selon la revendication 7 ou 8, **caractérisée en ce que** la deuxième couche (14) a une épaisseur comprise entre 0,01 et 0,1 millimètre, et de préférence comprise entre 0,02 et 0,07 millimètre.

10. La machine selon les revendications de 1 à 9, **caractérisée en ce que** l'épaisseur de la feuille chauffante (9) est inférieure à 0,4 millimètre et de préférence de l'ordre de 0,1 millimètre.

11. La machine selon les revendications de 1 à 10, **caractérisée en ce que** l'élément de support (10) est réalisé, au moins en partie, à partir d'un matériau céramique ou en silicone.

12. Une machine de fabrication de cigarettes, **caractérisée en ce qu'**elle comprend au moins une tête de soudage/scellage (7) selon les revendications de 1 à 11, par l'intermédiaire de laquelle deux bords longitudinaux (4b) superposés d'une enveloppe tubulaire (4a) enveloppant un cordon de tabac sont fixés l'un à l'autre.

13. Une machine de fabrication ou d'emballage de cigarettes, **caractérisée en ce qu'**elle comprend au moins une tête de soudage/scellage (7) selon les revendications de 1 à 11, par l'intermédiaire de laquelle une colle thermofusible précédemment appliquée sur les bords superposés (3b) d'une enveloppe (3a) est réactivée pour fixer ces mêmes bords (3b) l'un à l'autre.

14. Une cellophaneuse automatique pour suremballer des paquets de cigarettes ou des cartouches de paquets de cigarettes, **caractérisée en ce qu'**elle comprend au moins une tête de soudage/scellage (7) selon les revendications de 1 à 11, par l'intermédiaire de laquelle les bords superposés d'un suremballage thermoscellable sont fixés l'un à l'autre.

15. Une cellophaneuse automatique pour suremballer des paquets de cigarettes ou des cartouches de paquets de cigarettes, **caractérisée en ce qu'**elle comprend au moins une tête de soudage/scellage (7) selon les revendications de 1 à 11, par l'intermédiaire de laquelle fixer et/ou resserrer un suremballage thermorétractable.
